# FASCICULE DE BREVET EUROPEEN

(11) **EP 3 377 394 B1**
(45) Date de publication et mention de la délivrance du brevet: **11.12.2019**
(21) Numéro de dépôt: 16809482.9
(22) Date de dépôt: 08.11.2016
(51) Int. Cl.: B62D 35/00, B62D 35/02, B62D 37/02

(54) **DEFLECTEUR ACTIF**
AKTIVER DEFLEKTOR
ACTIVE DEFLECTOR

(30) Priorité: 18.11.2015 FR 1561093
(43) Date de publication de la demande: 26.09.2018
(73) Titulaire: Valeo Systemes Thermiques, 78322 Le Mesnil Saint-Denis Cedex (FR)
(72) Inventeur: VACCA, Frédéric, 78910 Behoust (FR)
(74) Mandataire: Tran, Chi-Hai
(86) Numéro de dépôt international: PCT/FR2016/052893
(87) Numéro de publication internationale: WO 2017/085375

(56) Documents cités:
- DE-A1-102006 009 681
- FR-A1- 2 858 793
- JP-A- H0 840 315
- JP-A- H05 105 124
- JP-A- H10 278 854
- JP-A- 2007 022 149

## Description

L'invention a notamment pour objet un dispositif de déflection placé devant une roue de véhicule automobile.

L'aérodynamisme d'un véhicule automobile est une caractéristique importante car il influence notamment la consommation de carburant (et donc la pollution) ainsi que les performances dudit véhicule. Ceci est particulièrement important lorsque le véhicule automobile se déplace à haute vitesse.

En mécanique des fluides, on quantifie la force de traînée qui s'exerce sur un véhicule automobile à l'aide d'une surface de référence S. En première approximation, la force de traînée, notée Fx, est égale à q*S*Cx, q désignant la pression dynamique (q = ½ ρ*V², ρ désignant la masse volumique de l'air et V la vitesse du véhicule par rapport à l'air), Cx désignant un coefficient de traînée propre au véhicule. La surface de référence utilisée pour un véhicule automobile est habituellement sa surface frontale. Afin de réduire la traînée, il est courant de réduire la surface de référence. Mais pour réduire la traînée encore davantage, il est possible d'influer sur d'autres paramètres. Il est notamment connu d'installer un dispositif désigné par l'acronyme AGS (provenant de l'expression de langue anglaise "Active Grille Shutter", ou obturateur actif de calandre). Le dispositif permet d'ouvrir ou de fermer l'accès de l'air via une calandre de véhicule automobile. En position ouverte, l'air peut circuler à travers la calandre et participer au refroidissement du moteur du véhicule automobile. En position fermée, l'air ne pénètre pas via la calandre ce qui réduit la traînée.

Lorsqu'un véhicule automobile se déplace, l'air dans lequel il évolue est dévié en fonction du profil du véhicule. L'air ainsi dévié atteint notamment le passage de roue. Le passage de roue est une cavité aménagée dans la carrosserie du véhicule, et entourant une roue (cela correspond à l'aile du véhicule). Le passage de roue remplit plusieurs fonctions. Il limite notamment (en les retenant) les projections d'eau, de boue ou d'autres matériaux sur lesquels la roue est susceptible de circuler et qu'elle peut être amenée à expulser lors de sa rotation.

L'air atteignant le passage de roue circule notamment dans l'espace étroit séparant la roue du passage de roue. Il est connu qu'à cette occasion, des turbulences se forment autour des tours de roue et créent un frein aérodynamique. Certains véhicules automobiles, disposaient ainsi d'un carénage jusqu'à l'axe des roues arrière, à l'extérieur, ce qui réduisait les turbulences par l'extérieur. Il est également connu de placer un déflecteur fixe devant une roue de véhicule automobile. Un tel déflecteur fixe, qui peut prendre la forme d'une bavette (souvent d'environ 5cm de hauteur), réduit les turbulences dans le passage de roue.

Cependant, un carénage extérieur n'a qu'une efficacité limitée et un déflecteur fixe risque d'être endommagé lors de franchissements d'obstacles (trottoir, ralentisseur de type dos d'âne, etc.).

L'invention vise à améliorer la situation.

L'invention se rapporte à un dispositif de déflection apte à être fixé en amont par rapport à l'écoulement de l'air d'une roue de véhicule automobile afin de réduire la traînée aérodynamique de ladite roue, le dispositif comprenant un déflecteur et un actionneur, l'actionneur étant agencé pour déployer et pour rétracter le déflecteur devant ladite roue. Un tel dispositif, décrit dans le préambule de la revendication indépendante 1, est divulgué dans chacun des documents DE 10 2006 009681 A1, FR 2 858 793 A1 et JP H05 105124 A.

Un tel dispositif de déflection est avantageux notamment en ce qu'il permet d'assurer une réduction de la traînée au niveau de la roue et en ce qu'il est apte à se prémunir contre les dommages liés aux franchissements d'obstacles par la roue.

Selon l'invention, le déflecteur est muni d'au moins un obturateur de passage d'air, le dispositif étant agencé pour ouvrir chaque obturateur lorsque l'actionneur commence à déployer le déflecteur, et pour fermer chaque obturateur lorsque l'actionneur finit de déployer le déflecteur.

L'invention se rapporte notamment à un dispositif de déflection dans lequel chaque obturateur comprend une plaquette agencée pour coulisser dans le plan du déflecteur, la plaquette étant munie d'au moins une ouverture.

L'invention se rapporte notamment à un dispositif de déflection dans lequel chaque obturateur comprend un volet.

L'invention se rapporte notamment à un dispositif de déflection dans lequel l'actionneur du dispositif est agencé pour ouvrir et pour fermer chaque obturateur.

L'invention se rapporte notamment à un dispositif de déflection dans lequel le déflecteur est mobile en rotation autour d'un axe parallèle à l'axe de la roue.

L'invention se rapporte notamment à un dispositif de déflection dans lequel le déflecteur a la même largeur que la roue.

L'invention se rapporte notamment à un dispositif de déflection agencé pour commander le déploiement du déflecteur lorsque la vitesse du dispositif excède un seuil prédéterminé, et pour commander la rétractation du déflecteur lorsque ladite vitesse passe sous un seuil prédéterminé.

L'invention se rapporte notamment à un dispositif de déflection agencé pour déployer le déflecteur jusqu'à une distance d'environ 80mm du sol sur lequel repose la roue.

L'invention se rapporte notamment à un dispositif de déflection dans lequel le déflecteur est placé en position horizontale par rapport au sol sur lequel repose la roue lorsqu'il est en position rétractée.

L'invention se rapporte notamment à un dispositif de déflection dans lequel le déflecteur est placé en position inclinée par rapport au sol sur lequel repose la roue lorsqu'il est en position déployée.

L'invention se rapporte aussi à un procédé de contrôle de la traînée aérodynamique affectant une roue de véhicule automobile, comprenant une étape de déploiement d'un tel déflecteur devant ladite roue à l'aide d'un actionneur afin de réduire ladite traînée, et une étape de rétractation dudit déflecteur à l'aide dudit actionneur lorsque la réduction de ladite traînée n'est plus opportune. Ce procédé constitue une utilisation avantageuse d'un dispositif de déflection selon une mode de réalisation de l'invention.

D'autres caractéristiques et avantages de l'invention apparaîtront à la lecture de la description qui va suivre. Celle-ci est purement illustrative et doit être lue en regard des dessins annexés sur lesquels :
- les figures 1A, 2A et 3A, illustrent des coupes verticales longitudinales d'un véhicule automobile équipé d'un dispositif de déflection selon un mode de réalisation de l'invention, lors de trois étapes successives de déploiement d'un déflecteur ;
- les figures 1B, 2B et 3B, correspondent respectivement aux figures 1A, 2A et 3A, et illustrent des vues de face d'un véhicule automobile équipé d'un dispositif de déflection selon un mode de réalisation de l'invention.

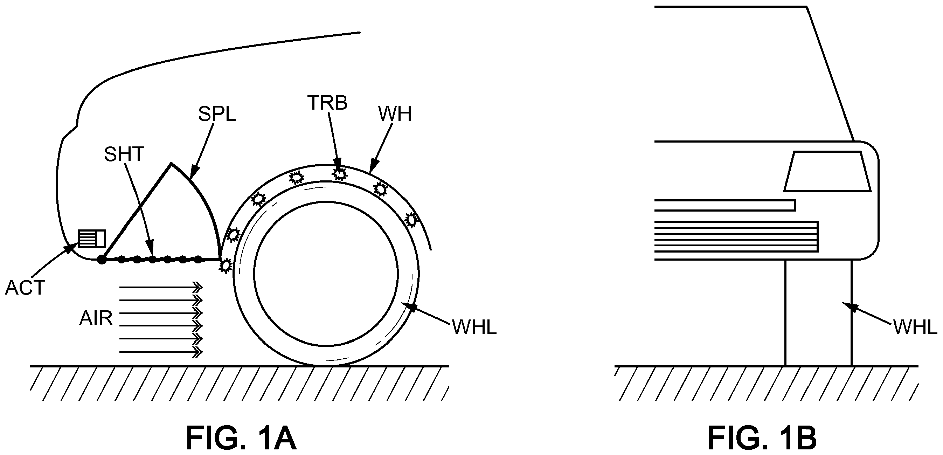

La figure 1A illustre une coupe verticale d'un véhicule automobile selon une direction longitudinale du véhicule. Le véhicule est illustré en situation de déplacement. Un vent relatif AIR vient donc exercer une pression sur le véhicule. Ce vent relatif crée des turbulences TRB dans un passage de roue WH (en anglais, "wheelhouse") du véhicule. Le véhicule comprend un dispositif de déflection comprenant un déflecteur SPL et un actionneur ACT. L'actionneur ACT est par exemple un servomoteur ou tout moteur électrique approprié. L'actionneur ACT est représenté schématiquement. Le déflecteur SPL représenté prend la forme d'une portion de cylindre droit, articulée au niveau de l'axe de symétrie du cylindre droit. Le déflecteur SPL représenté comprend six volets SHT (en anglais, "shutter"). Il totalement rétracté, et les volets SHT sont fermés.

La figure 1B illustre le véhicule automobile de la figure 1A, en vue de face. Seule la moitié gauche du véhicule est illustrée. On constate sur cette figure 1B, comme sur la figure 1A, que la roue WHL n'est pas protégée par le déflecteur SPL, qui est entièrement rétracté.

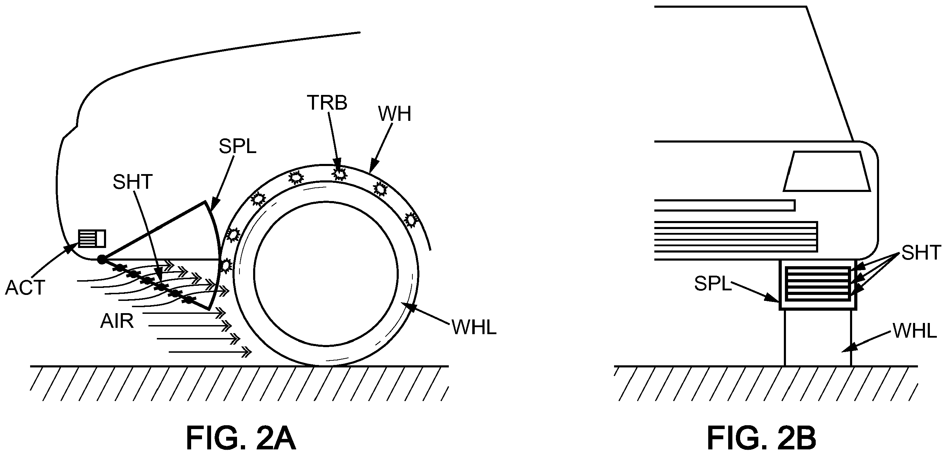

La figure 2A représente le véhicule de la figure 1A (selon la même coupe verticale que sur la figure 1A), dans lequel de déflecteur SPL est partiellement (à moitié) déployé. Les six volets SHT sont ouverts, de manière à laisser passer le vent relatif AIR et à limiter l'effort de l'actionneur ACT nécessaire pour poursuivre le déploiement du déflecteur SPL.

La figure 2B illustre le véhicule automobile de la figure 2A, en vue de face. Seule la moitié gauche du véhicule est illustrée. On constate sur cette figure 2B, comme sur la figure 2A, que la roue WHL est partiellement protégée par le déflecteur SPL, qui est partiellement déployé, et qui laisse passer une partie du vent relatif. On aperçoit ainsi, schématiquement, les six volets SHT, représentés sous forme de segments parallèles. Les surfaces qui constituent ces six volets sont sensiblement parallèles au sol sur lequel le véhicule évolue, afin d'offrir une résistance minimale au vent relatif en cours de déploiement du déflecteur. En vue de face, elles apparaissent donc schématiquement comme des segments horizontaux.

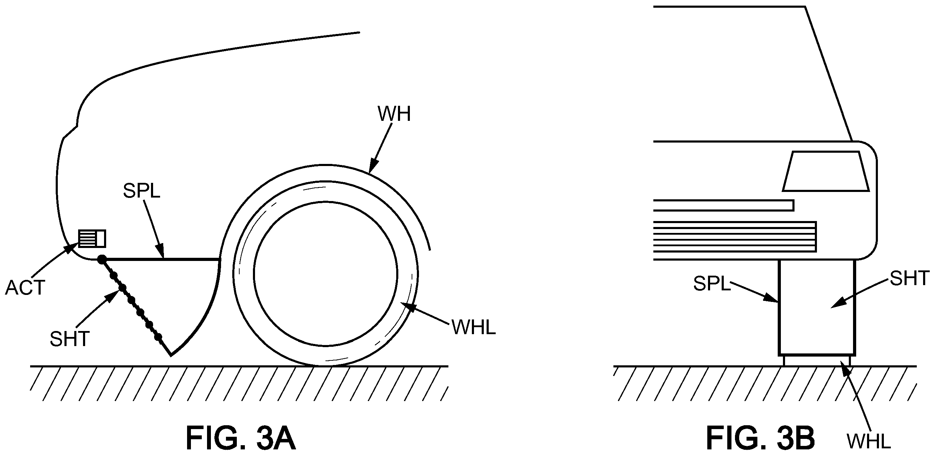

La figure 3A représente le véhicule des figures 1A et 2A, selon la même coupe verticale, dans lequel de déflecteur SPL est complètement déployé. Les six volets SHT sont fermés, de manière à dévier le vent relatif et à empêcher autant que possible l'entrée du vent relatif dans le passage de roue WH.

La figure 3B illustre le véhicule automobile de la figure 3A, en vue de face. Seule la moitié gauche du véhicule est illustrée. On constate sur cette figure 3B, comme sur la figure 3A, que la roue WHL est largement protégée par le déflecteur SPL, qui est complètement déployé. Ce déploiement complet intervient sur la majeure partie de la hauteur séparant le sol sur lequel circule le véhicule automobile de l'axe de rotation du déflecteur (qui se situe en l'espèce au niveau du bas de caisse). Les six volets SHT, qui sont fermés, forment collectivement une surface continue, étanche à l'air. Ils ne sont donc pas reproduits sur la figure car non visibles sur une représentation schématique. Le déflecteur SPL dévie ainsi l'essentiel du vent relatif, et protège le passage de roue des turbulences qui conduiraient sinon à une traînée aérodynamique beaucoup plus importante.

Un premier mode de réalisation se rapporte à un dispositif de déflection. Le dispositif est apte à être fixé devant une roue WHL de véhicule automobile, afin de réduire la traînée aérodynamique de ladite roue WHL. Le dispositif comprend un déflecteur SPL. Il comprend de surcroît un actionneur ACT agencé pour déployer le déflecteur SPL devant ladite roue WHL, ainsi que pour rétracter ledit déflecteur SPL devant ladite roue WHL. En d'autres termes, le déflecteur SPL se situe en amont de la roue WHL par rapport à l'écoulement de l'air. Par "devant", on entend que le déflecteur SPL se trouve entre l'avant du véhicule automobile (par exemple son parechocs avant) et la roue WHL. Ainsi, lorsque le véhicule automobile circule en marche avant, le vent relatif généré par cette circulation atteint le déflecteur SPL avant d'atteindre la roue WHL.

Selon une mise en œuvre possible, le déflecteur est déployé en recourant à un mouvement de rotation dudit réflecteur.

Selon une variante, le déflecteur est déployé via un mouvement de translation dudit réflecteur. Le déflecteur peut ainsi prendre la forme d'une plaque guidée le long d'une paire de rails.

Selon un deuxième mode de réalisation, le déflecteur SPL d'un dispositif selon le premier mode de réalisation est muni d'au moins un obturateur de passage d'air, le dispositif étant agencé pour ouvrir chaque obturateur lorsque l'actionneur commence à déployer le déflecteur SPL, et pour fermer chaque obturateur lorsque l'actionneur finit de déployer le déflecteur SPL. L'obturateur peut prendre des formes diverses. Selon une mise en œuvre possible, le déflecteur comprend un unique obturateur. Selon une autre mise en œuvre, le déflecteur comprend plusieurs obturateurs, qui sont soit tous identiques, soit différents les uns des autres.

Selon un troisième mode de réalisation non illustré, chaque obturateur d'un dispositif selon le deuxième mode de réalisation comprend une plaquette agencée pour coulisser dans le plan du déflecteur, une partie de la plaquette étant munie d'au moins une ouverture. Par exemple, la plaquette est de forme rectangulaire, la moitié du rectangle étant pleine (et donc étanche à l'air), l'autre moitié comprenant un ou plusieurs trous. Le déflecteur comprend par exemple une plaque formant un plan dont une face dite externe est exposée à l'air, et dont une face opposée dite interne comporte des rails de guidage pour la ou les plaquettes. Cette plaque est, selon une mise en œuvre possible, munie, pour chaque obturateur, d'une fenêtre respective. Chaque fenêtre peut notamment consister en un orifice ayant la forme d'un disque ou d'un parallélépipède. Chaque plaquette, agencée pour coulisser parallèlement à cette plaque, laisse passer l'air lorsque son ouverture (ou ses ouvertures si elle en comporte plusieurs) se situe au niveau de la fenêtre respective, mais empêche le passage de l'air lorsque la surface formée par son ouverture n'a aucune intersection avec la surface de la fenêtre respective.

Selon un quatrième mode de réalisation, le déflecteur SPL d'un dispositif selon le premier mode de réalisation est muni de volets SHT. Le dispositif est agencé pour ouvrir les volets SHT lorsque l'actionneur commence à déployer le déflecteur SPL, et pour fermer les volets SHT lorsque l'actionneur finit de déployer le déflecteur SPL.

Par exemple, dès que l'actionneur commence à déployer le déflecteur, les volets SHT sont immédiatement ouverts. Une ouverture plus progressive est également possible. Selon une mise en œuvre possible, les volets SHT ne sont refermés lors du déploiement du déflecteur que lorsque ce déploiement est achevé. Alternativement, la fermeture des volets SHT est plus progressive est débute avant l'achèvement complet du déploiement du déflecteur. Il est possible de combiner une ouverture immédiate avec une fermeture progressive, et réciproquement une ouverture progressive avec une fermeture immédiate.

Selon une mise en œuvre possible, le dispositif maintient les volets SHT sensiblement parallèles au sol sur lequel circule le véhicule pendant tout le déploiement du déflecteur, ce qui peut impliquer de faire varier une commande d'orientation de ces volets tout au long du déploiement.

Ces différentes mises en œuvre sont avantageuses en ce qu'elle permettent de réduire l'effort nécessaire pour déployer le déflecteur. Il est ainsi possible d'utiliser un actionneur ACT plus léger, plus petit et moins puissant.

Selon une mise en œuvre possible, lors de la rétractation du déflecteur, la cinématique des volets est symétrique de celle de la phase de déploiement du déflecteur. Ceci peut être avantageux du point de vue de la simplicité du dispositif.

Selon une variante, les volets SHT sont maintenus fermés lors de la rétractation du déflecteur SPL. Ainsi, l'effort requis pour rétracter le réflecteur peut être réduit en profitant de la force résultant du vent relatif. C'est notamment le cas lorsque le déploiement et la rétractation du déflecteur résultent d'un mouvement de rotation tel qu'illustré sur les figures 1A, 2A et 3A.

Selon un cinquième mode de réalisation, l'actionneur ACT d'un dispositif selon l'un des deuxième au quatrième modes de réalisation est agencé pour ouvrir et pour fermer chaque obturateur. Il peut ainsi fermer les volets SHT, lorsque les obturateurs prennent la forme de volets. Ceci est avantageux, car cela simplifie la construction du dispositif de déflection qui ne nécessite qu'un seul actionneur ACT pour piloter à la fois le déflecteur SPL et ses volets SHT. Dans ce cas, une cinématique de rétractation du déflecteur symétrique de la cinématique de déploiement du déflecteur est plus simple à mettre en œuvre qu'une cinématique asymétrique telle qu'envisagée dans une variante précitée.

Selon un sixième mode de réalisation, le déflecteur SPL d'un dispositif selon l'un des premier au cinquième modes de réalisation est mobile en rotation autour d'un axe parallèle à l'axe de la roue WHL. Ceci permet le déploiement et la rétractation du déflecteur SPL par un mouvement de rotation. Les figures 1A à 3A illustrent un tel mode de réalisation.

Selon un septième mode de réalisation, le déflecteur SPL d'un dispositif selon l'un des premier au sixième modes de réalisation a la même largeur que la roue WHL. Ceci est avantageux, car cela permet de ne pas accroître la surface de référence du véhicule, qui est déterminante pour la traînée aérodynamique.

Selon un huitième mode de réalisation, un dispositif selon l'un des premier au septième modes de réalisation est agencé pour commander le déploiement du déflecteur SPL lorsque la vitesse du dispositif excède un seuil prédéterminé, et pour commander la rétractation du déflecteur SPL lorsque ladite vitesse passe sous un seuil prédéterminé.

Le dispositif comprend par exemple un circuit électronique tel qu'un microprocesseur ou un microcontrôleur recevant une information de vitesse depuis un capteur de vitesse, et ordonnant le déploiement le déploiement ou la rétractation du déflecteur en conséquence. Selon une mise en œuvre possible, un mécanisme d'hystérésis est prévu afin d'éviter les effets de seuil. Ainsi, il est possible de prévoir que l'actionneur déclenche le déploiement du déflecteur dès que la vitesse dépasse un seuil donné (par exemple 50km/h), mais que l'actionneur ne déclenche la rétractation du déflecteur que lorsque la vitesse redescend en dessous d'un seuil inférieur au seuil précité (par exemple un seuil de 40km/h). Ainsi, le circuit évite de déclencher de façon intempestives des alternances de déploiement et de rétractation lorsque le véhicule circule à une vitesse proche du seuil initial et passe en permanence d'un côté et de l'autre de ce seuil.

Le seuil de déclenchement du déploiement (par exemple 50km/h) est choisi de façon à être suffisamment élevé pour que le déploiement ait un effet perceptible sur la traînée aérodynamique. La traînée varie avec le carré de la vitesse. Pour les vitesses faibles, la traînée est elle-même très faible. Déployer le déflecteur n'est alors pas utile.

Le seuil de déclenchement de la rétractation (par exemple 40 km/h) est choisi de façon à être suffisamment élevé pour que le conducteur ne puisse raisonnablement envisager de franchissement d'obstacles (trottoirs, dos d'âne, etc.) à la vitesse considérée. Ainsi, on évite que le véhicule automobile soit amené à franchir un tel obstacle (de nature a endommager le déflecteur) alors que le déflecteur est déployé.

Selon un neuvième mode de réalisation, un dispositif selon l'un des premier au huitième modes de réalisation est agencé pour déployer le déflecteur jusqu'à une distance d'environ 80 mm du sol sur lequel repose la roue WHL. La distance considérée est la distance, selon une direction perpendiculaire au sol sur lequel circule le véhicule automobile, entre le point le plus bas du déflecteur et le sol.

Selon une mise en œuvre possible, l'étendue du déploiement est réglable (par exemple à l'aide d'une vis), afin de choisir une valeur de distance au sol dans une plage donnée (par exemple entre 60mm et 100mm).

Selon une variante, le déflecteur est muni d'un capteur de distance. Le dispositif est alors agencé pour interrompre le déploiement du déflecteur lorsqu'une extrémité basse du déflecteur atteint une distance prédéfinie (par exemple 80mm du sol). Un tel capteur peut s'avérer avantageux dans l'hypothèse où il existe une marge importante dans la position de fixation du dispositif de déflection sur le véhicule automobile considéré. Un tel capteur peut également s'avérer avantageux dans l'hypothèse où le dispositif de déflection est susceptible d'être installé sur des types de véhicules différents. Dans ces hypothèses, le dispositif de déflection ne connaît pas nécessairement sa distance au sol, et le capteur permet de fixer la limite de déploiement de façon automatique sans avoir à opérer de réglage. Le capteur de distance peut (de surcroît ou alternativement) ordonner une rétractation (éventuellement partielle) lorsqu'il détecte que le déflecteur est trop proche du sol, quand bien même le véhicule circulerait à une vitesse supérieure au seuil de rétractation. Ceci peut se produire si le véhicule franchit un obstacle à haute vitesse. Ceci peut éviter d'endommager le déflecteur si l'actionneur est suffisamment rapide. Alternativement, le capteur de distance peut être utilisé pour débrayer le déflecteur si ce dernier s'approche trop du sol. Ainsi, pour un déflecteur du type de celui illustré sur les figures 1A à 3A, le débrayage conduirait spontanément à rétracter quelque peu le déflecteur (grâce au vent relatif), et permettrait d'encaisser un choc éventuel avec le sol sans endommager l'actuateur (débrayé), et en limitant les dommages au déflecteur.

Selon un dixième mode de réalisation, le déflecteur SPL d'un dispositif selon l'un des premier au neuvième modes de réalisation est placé en position horizontale par rapport au sol sur lequel repose la roue WHL lorsqu'il est en position rétractée. Dans ce mode de réalisation, la surface du déflecteur qui est exposée au vent relatif est supposée plane. La position horizontale est alors définie par rapport au plan du déflecteur qui est exposé au vent relatif. La position est dite horizontale lorsque ce plan est sensiblement parallèle au sol sur lequel circule le véhicule automobile.

Selon une mise en œuvre possible, dans cette position horizontale rétractée, les volets SHT éventuels du déflecteur sont fermés. Ceci est avantageux et évite la pénétration de polluants divers (eau, poussière, boue, etc.) depuis l'extérieur du véhicule à travers les ouvertures que laisseraient des volets SHT ouverts.

De façon plus générale, il est avantageux de fermer les volets SHT éventuels lorsque le déflecteur est en position rétractée pour les raisons précitées. Mais il est également possible de maintenir les volets SHT ouverts (notamment dans le but de simplifier la cinématique de pilotage des volets SHT).

Selon un onzième mode de réalisation, le déflecteur SPL d'un dispositif selon l'un des premier au dixième modes de réalisation est placé en position inclinée par rapport au sol sur lequel repose la roue WHL lorsqu'il est en position déployée. Dans ce mode de réalisation, la surface du déflecteur qui est exposée au vent relatif est supposée plane. L'inclinaison du déflecteur est alors définie par rapport au plan du déflecteur qui est exposé au vent relatif. Par exemple, le déflecteur peut être incliné d'environ 135° par rapport au sol, comme c'est illustré sur la figure 3A. La position est dite inclinée lorsqu'elle n'est ni horizontale ni verticale.

Selon un douzième mode de réalisation, un procédé de contrôle de la traînée aérodynamique affectant une roue WHL de véhicule automobile comprend une étape de déploiement d'un déflecteur SPL devant ladite roue WHL à l'aide d'un actionneur ACT. Ceci permet de réduire ladite traînée. Le procédé comprend de plus une étape de rétractation dudit déflecteur SPL à l'aide dudit actionneur ACT lorsque la réduction de ladite traînée n'est plus opportune. Le procédé peut mettre en œuvre les différentes fonctions du dispositif de déflection précédemment décrit. Il peut notamment piloter la butée de déploiement du déflecteur à l'aide d'un capteur de distance, piloter l'ouverture et la fermeture d'éventuels volets du déflecteur, etc.

## Revendications

1. Dispositif de déflection apte à être fixé en amont par rapport à l'écoulement de l'air d'une roue (WHL) de véhicule automobile, le dispositif comprenant un déflecteur (SPL) et un actionneur (ACT), l'actionneur (ACT) étant agencé pour déployer et pour rétracter le déflecteur (SPL) devant ladite roue (WHL) **caractérisé en ce que** le déflecteur (SPL) est muni d'au moins un obturateur de passage d'air, le dispositif étant agencé pour ouvrir chaque obturateur lorsque l'actionneur commence à déployer le déflecteur (SPL), et pour fermer chaque obturateur lorsque l'actionneur finit de déployer le déflecteur (SPL).

2. Dispositif selon la revendication 1, dans lequel chaque obturateur comprend une plaquette agencée pour coulisser dans le plan du déflecteur, la plaquette étant munie d'au moins une ouverture.

3. Dispositif selon la revendication 1, dans lequel chaque obturateur comprend un volet (SHT).

4. Dispositif selon l'une des revendications 1 à 3, dans lequel l'actionneur (ACT) du dispositif est agencé pour ouvrir et pour fermer chaque obturateur.

5. Dispositif selon l'une des revendications précédentes, dans lequel le déflecteur (SPL) est mobile en rotation autour d'un axe parallèle à l'axe de la roue (WHL).

6. Dispositif selon l'une des revendications précédentes, dans lequel le déflecteur (SPL) a la même largeur que la roue (WHL).

7. Dispositif selon l'une des revendications précédentes, agencé pour commander le déploiement du déflecteur (SPL) lorsque la vitesse du dispositif excède un seuil prédéterminé, et pour commander la rétractation du déflecteur (SPL) lorsque ladite vitesse passe sous un seuil prédéterminé.

8. Dispositif selon l'une des revendications précédentes, agencé pour déployer le déflecteur jusqu'à une distance d'environ 80mm du sol sur lequel repose la roue (WHL).

9. Dispositif selon l'une des revendications précédentes, dans lequel le déflecteur (SPL) est placé en position horizontale par rapport au sol sur lequel repose la roue (WHL) lorsqu'il est en position rétractée.

10. Dispositif selon l'une des revendications précédentes, dans lequel le déflecteur (SPL) est placé en position inclinée par rapport au sol sur lequel repose la roue (WHL) lorsqu'il est en position déployée.

11. Procédé de contrôle de la traînée aérodynamique affectant une roue (WHL) de véhicule automobile, comprenant une étape de déploiement d'un déflecteur (SPL) selon l'une des revendications précédentes devant ladite roue (WHL) à l'aide d'un actionneur (ACT) afin de réduire ladite traînée, et une étape de rétractation dudit déflecteur (SPL) à l'aide dudit actionneur (ACT) lorsque la réduction de ladite traînée n'est plus opportune.

## Patentansprüche

1. Luftleitvorrichtung, die stromaufwärts bezüglich der Luftströmung eines Rads (WHL) eines Kraftfahrzeugs befestigt werden kann, wobei die Vorrichtung ein Leitblech (SPL) und einen Stellantrieb (ACT) enthält, wobei der Stellantrieb (ACT) eingerichtet ist, um das Leitblech (SPL) vor dem Rad (WHL) aus- und einzufahren, **dadurch gekennzeichnet, dass** das Leitblech (SPL) mit mindestens einem Luftdurchgangsverschluss versehen ist, wobei die Vorrichtung eingerichtet ist, um jeden Verschluss zu öffnen, wenn der Stellantrieb beginnt, das Leitblech (SPL) auszufahren, und um jeden Verschluss zu schließen, wenn der Stellantrieb das Ausfahren des Leitblechs (SPL) beendet.

2. Vorrichtung nach Anspruch 1, wobei jeder Verschluss eine Platte enthält, die eingerichtet ist, um in der Ebene des Leitblechs zu gleiten, wobei die Platte mit mindestens einer Öffnung versehen ist.

3. Vorrichtung nach Anspruch 1, wobei jeder Verschluss eine Klappe (SHT) enthält.

4. Vorrichtung nach einem der Ansprüche 1 bis 3, wobei der Stellantrieb (ACT) der Vorrichtung eingerichtet ist, um jeden Verschluss zu öffnen und zu schließen.

5. Vorrichtung nach einem der vorhergehenden Ansprüche, wobei das Leitblech (SPL) um eine Achse parallel zur Achse des Rads (WHL) drehbeweglich ist.

6. Vorrichtung nach einem der vorhergehenden Ansprüche, wobei das Leitblech (SPL) die gleiche Breite hat wie das Rad (WHL).

7. Vorrichtung nach einem der vorhergehenden Ansprüche, die eingerichtet ist, um das Ausfahren des Leitblechs (SPL) zu steuern, wenn die Geschwindigkeit der Vorrichtung eine vorbestimmte Schwelle überschreitet, und um das Einfahren des Leitblechs (SPL) zu steuern, wenn die Geschwindigkeit unter eine vorbestimmte Schwelle geht.

8. Vorrichtung nach einem der vorhergehenden Ansprüche, die eingerichtet ist, um das Leitblech bis zu einem Abstand von etwa 80 mm vom Boden auszufahren, auf dem das Rad (WHL) aufliegt.

9. Vorrichtung nach einem der vorhergehenden Ansprüche, wobei das Leitblech (SPL) bezüglich des Bodens, auf dem das Rad (WHL) aufliegt, in waagrechter Stellung angeordnet ist, wenn es in der eingefahrenen Stellung ist.

10. Vorrichtung nach einem der vorhergehenden Ansprüche, wobei das Leitblech (SPL) bezüglich des Bodens, auf dem das Rad (WHL) aufliegt, in geneigter Stellung angeordnet ist, wenn es in der ausgefahrenen Stellung ist.

11. Verfahren zur Kontrolle des aerodynamischen Widerstands, der ein Rad (WHL) eines Kraftfahrzeugs beeinträchtigt, das einen Schritt des Ausfahrens eines Leitblechs (SPL) nach einem der vorhergehenden Ansprüche vor dem Rad (WHL) mit Hilfe eines Stellantriebs (ACT), um den Widerstand zu verringern, und einen Schritt des Einfahrens des Leitblechs (SPL) mit Hilfe des Stellantriebs (ACT) enthält, wenn die Verringerung des Widerstands nicht mehr zweckmäßig ist.

## Claims

1. Deflection device able to be attached upstream with regard to the flow of air of a wheel (WHL) of a motor vehicle, the device comprising a deflector (SPL) and an actuator (ACT), the actuator (ACT) being arranged to deploy and to retract the deflector (SPL) in front of said wheel (WHL), **characterized in that** the deflector (SPL) is provided with at least one air passage obturator, the device being arranged to open each obturator when the actuator begins to deploy the deflector (SPL), and to close each obturator when the actuator finishes deploying the deflector (SPL).

2. Device according to Claim 1, in which each obturator comprises a plate that is arranged to slide in the plane of the deflector, the plate being provided with at least one opening.

3. Device according to Claim 1, in which each obturator comprises a shutter (SHT).

4. Device according to one of Claims 1 to 3, in which the actuator (ACT) of the device is arranged to open and to close each obturator.

5. Device according to one of the preceding claims, in which the deflector (SPL) is mobile in rotation about an axis parallel to the axis of the wheel (WHL).

6. Device according to one of the preceding claims, in which the deflector (SPL) has the same width as the wheel (WHL).

7. Device according to one of the preceding claims, arranged to order the deployment of the deflector (SPL) when the speed of the device exceeds a predetermined threshold, and to order the retraction of the deflector (SPL) when said speed drops below a predetermined threshold.

8. Device according to one of the preceding claims, arranged to deploy the deflector to a distance of approximately 80 mm from the ground on which the wheel (WHL) rests.

9. Device according to one of the preceding claims, in which the deflector (SPL) is placed in a horizontal position with respect to the ground on which the wheel (WHL) rests, when the deflector is in a retracted position.

10. Device according to one of the preceding claims, in which the deflector (SPL) is placed in a position inclined with respect to the ground on which the wheel (WHL) rests, when the deflector is in a deployed position.

11. Method for controlling the aerodynamic drag on a wheel (WHL) of a motor vehicle, comprising a step of deploying a deflector (SPL) according to one of the preceding claims in front of said wheel (WHL) using an actuator (ACT) in order to reduce said drag, and a step of retracting said deflector (SPL) using said actuator (ACT) when the reduction of said drag is no longer advantageous.
